# EUROPÄISCHE PATENTANMELDUNG

(11) **EP 1 650 689 A1**
(43) Veröffentlichungstag der Anmeldung: **26.04.2006**
(21) Anmeldenummer: 05019391.1
(22) Anmeldetag: 07.09.2005
(51) Int. Cl.: G06F 21/00

(54) **Verfahren und System zur selektiven Abfrage von Teilnehmerinformationen**

(30) Priorität: 23.10.2004 DE 102004051726
(71) Anmelder: Deutsche Telekom AG, 53113 Bonn (DE)
(72) Erfinder: Trinkel, Marian, Dipl.-Ing., 52372 Kreuzau OT Untermaubach (DE); Daussmann, Frank, 67454 Hassloch (DE)

(57) **Zusammenfassung**

Die Erfindung betrifft ein Verfahren und ein System zur Durchführung einer Telekommunikation in einem Telekommunikationsnetzwerk zwischen wenigstens zwei Telekommunikationsteilnehmern, die jeweils ein Telekommunikationsgerät verwenden, wobei wenigstens einem der Telekommunikationsteilnehmer Informationen über den anderen Telekommunikationsteilnehmer zur Verfügung gestellt werden, wobei innerhalb des Telekommunikationsnetzwerkes (1) wenigstens ein Schlüssel (3) generiert wird, der wenigstens einem Telekommunikationsteilnehmer (B) bzw. dessen Telekommunikationsgerät übermittelt wird, wobei der/die Schlüssel (3) dem Telekommunikationsteilnehmer (B) ermöglicht, auf Informationen, insbesondere in wenigstens einer Datenbank (DB1, DB2; T) vorgehaltene Informationen über den anderen Telekommunikationsteilnehmer (A) zuzugreifen.

## Beschreibung

Die Erfindung betrifft ein Verfahren und ein System zur Durchführung einer Telekommunikation in einem Telekommunikationsnetzwerk zwischen wenigstens zwei Telekommunikationsteilnehmem, die jeweils ein Telekommunikationsgerät verwenden, wobei wenigstens einem der Telekommunikationsteilnehmer Informationen über den anderen Telekommunikationsteilnehmer zur Verfügung gestellt werden.

Ein derartiges Verfahren ist z.B. dadurch bekannt, dass ein Anrufer bei der Durchführung eines Telefonanrufs seine Rufnummer übermittelt. Diese Rufnummer wird einem Angerufenen als Information zur Verfügung gestellt, so dass dieser schon vor der Entgegennahme des Telefonats darüber in Kenntnis gesetzt wird, wer anruft bzw. zumindest von welchem Telekommunikationsanschluss der Anruf ausgeht.

Eine derartige Informationsübermittlung, wie beispielsweise die Übermittlung der Rufnummer, wird oftmals jedoch als nicht ausreichend angesehen, da diese Information, hier zumindest über den Anrufer, nur sehr dürftig ist.

Aufgabe der Erfindung ist es, ein Verfahren und ein System bereitzustellen, mit dem einem Telekommunikationsteilnehmer weitergehende ausführliche Informationen über einen anderen Telekommunikationsteilnehmer zur Verfügung gestellt werden kann.

Diese Aufgabe wird gemäß der Erfindung dadurch gelöst, dass innerhalb des Telekommunikationsnetzwerkes wenigstens ein Schlüssel generiert wird, der wenigstens einem Telekommunikationsteilnehmer bzw. dessen Telekommunikationsgerät übermittelt wird, wobei der/die Schlüssel dem Telekommunikationsteilnehmer ermöglicht, auf Informationen, insbesondere in wenigstens einer Datenbank vorgehaltene Informationen, über den anderen Telekommunikationsteilnehmer zuzugreifen.

Grundgedanke der Erfindung ist es, dass über einen Telekommunikationsteilnehmer üblicherweise deutlich mehr Informationen vorliegen als lediglich diejenigen, die z.B. durch eine Rufnummerübermittlung, gegeben sein können. Bezogen auf eine bestimmte Person, die als Telekommunikationsteilnehmer auftreten kann, können eine Vielzahl von beliebiger Informationen existent sein, die gegebenenfalls für eine andere Person, d.h. hier im Rahmen der Erfindung für einen anderen Telekommunikationsteilnehmer, von Interesse sein könnten.

So kann es gemäß einer bevorzugten Ausführung der Erfindung vorgesehen sein, dass derartige Informationen in wenigstens einer Datenbank vorgehalten werden, wobei Informationen, auf die zugegriffen werden kann, beispielsweise netzintern in wenigstens einer Datenbank gespeichert sein können. Ebenso kann es vorgesehen sein, dass diese Daten dezentral außerhalb eines Netzes gespeichert sind.

Da somit im Rahmen der Erfindung für eine Vielzahl von Telekommunikationsteilnehmern, bevorzugt für alle möglichen Telekommunikationsteilnehmer, Informationen gespeichert sein können, bedarf es einer Möglichkeit, die benötigten Informationen gezielt aus der Summe aller möglichen Informationen herauszusuchen und für einen Zugriff bereitzustellen.

Hierbei ist es gemäß der Erfindung vorgesehen, einen Zugriff auf die Informationen erst dann zu ermöglichen, wenn derjenige Telekommunikationsteilnehmer, der einen Zugriff auf Informationen wünscht, wenigstens einen Schlüssel erhalten hat, mit dem/denen ein solcher Zugriff auf die Informationen ermöglicht wird.

Der Schlüssel kann beispielsweise dafür vorgesehen sein, um als Entschlüsselungscode für verschlüsselte Daten zu dienen. Ebenfalls kann ein Schlüssel vorgesehen sein, der durch die Tatsache seines Besitzes denjenigen Telekommunikationsteilnehmer, der Informationen abzufragen wünscht, für eine solche Abfrage legitimiert. Hierbei kann bevorzugt ein solcher Schlüssel als Hashwert gebildet sein.

Gemäß einer bevorzugten Weiterbildung der Erfindung kann es vorgesehen sein, dass wenigstens ein Telekommunikationsteilnehmer, insbesondere ein Anrufer, gegebenenfalls aber auch beide Telekommunikationsteilnehmer, identifiziert werden, so dass ein identifikationsabhängiger Schlüssel generiert werden kann, der einen Zugriff auf Informationen erlaubt, die mit dem identifizierten Telekommunikationsteilnehmer korreliert sind.

Durch einen derartigen identifikationsabhängig generierten Schlüssel wird somit sicher gestellt, dass aus einer Vielzahl von möglichen Informationen, die in einer Datenbank vorgehalten werden, lediglich diejenigen für einen Telekommunikationsteilnehmer zum Zugriff bereit gehalten werden, die definitiv mit dem identifizierten anderen Telekommunikationsteilnehmer korreliert sind. So kann ein Telekommunikationsteilnehmer sicher sein, dass Informationen, die er gegebenenfalls abzurufen bzw. auf diese zuzugreifen wünscht, in jedem Fall zu dem anderen Telekommunikationsteilnehmer gehören.

Eine Identifikation und die anschließende, hiervon abhängige Generierung eines Schlüssels kann bevorzugt anhand einer Kennung durchgeführt werden. Eine solche Kennung kann eine oder mehrere Kennungsklassen umfassen, wobei derartige Klassen aus einer und/oder mehreren Merkmalen bestehen. So kann es sich bei einer Kennung z.B. handeln um:
1. eine Kundenkennung, z.B. Kundennummer, PAN (Personalausweisnummer) etc.
2. eine Kommunikationskennung, z.B. CLI (Calling Line Identification), HLR (Home Location Register), VLR (Visitor Location Register), IP-Adresse (z.B. im Internet), eine Rufnummer, eine Telefonrufnummer, Telekartennummer
3. eine Gerätekennung, z.B. IMEI (International Mobile Equipment Identity), Telekartennummer, SIM-Karte (Subscriber Identity Module), Smart-Card
4. eine Transaktionskennung für die Transaktion der Kommunikation, Call-ID
5. eine biometrische Kennung, z.B. ein Fingerabdruck eines Telekommunikationsteilnehmers, eine Sprachprobe, Irisinformationen, oder andere Informationen, die mit dem Körper eines Telekommunikationsteilnehmers im Zusammenhang stehen und diesen Teilnehmer identifizieren.

Bei einer derartigen Kennung kann es sich beispielsweise um eine Kennung handeln, die standardmäßig beim Aufbau einer Telekommunikationsverbindung in einem Telekommunikationsnetz zur Verfügung gestellt wird, wie beispielsweise eine Netzwerkkennung oder aber auch um eine Kennung, die ein Telekommunikationsteilnehmer explizit zur Verfügung stellt, wie beispielsweise eine biometrische Kennung.

In einer einfachen Ausführung des erfindungsgemäßen Verfahrens wird ein Schlüssel somit bevorzugt in Abhängigkeit einer Kennung eines der beiden Telekommunikationsteilnehmer generiert, beispielsweise in Abhängigkeit der Kennung eines Anrufers. Dies kann wie vorgenannt besonders einfach dadurch erfolgen, dass bei einem Telefonanruf die CLI, d.h. die sogenannte Calling Line Identification, ausgenutzt wird, um einen Telekommunikationsteilnehmer bzw. zumindest das Telekommunikationsgerät, von dem der Anruf ausgeht, zu identifizieren.

Aufgrund dieser Identifikation kann anschließend ein Schlüssel generiert werden, über den ein Zugriff möglich ist, auf diejenigen Informationen, die mit dem identifizierten Telekommunikationsteilnehmer in Verbindung stehen. Diese Informationen können sodann dem anderen Telekommunikationsteilnehmer zur Verfügung gestellt werden, wenn dieser den empfangenen Schlüssel hierfür verwendet.

Ebenso ist es möglich, dass ein identifikationsabhängiger Schlüssel anhand einer Kennung eines angerufenen Telekommunikationsteilnehmers generiert wird, um dem Anrufer Informationen über den angerufenen Telekommunikationsteilnehmer zur Verfügung zu stellen. Hierfür kann in einem einfachen Beispiel die angerufene Telefonnummer, die üblicherweise ein bestimmtes Telekommunikationsgerät identifiziert, verwendet werden.

In einer weiterhin bevorzugten Ausbildung des erfindungsgemäßen Verfahrens kann es ebenso möglich sein, wenigstens einen Schlüssel in Abhängigkeit der Identifikation beider Telekommunikationsteilnehmer zu generieren. Hierbei kann beispielsweise ein Schlüssel generiert werden, mittels dem jeder Telekommunikationsteilnehmer auf die Information des jeweils anderen Telekommunikationsteilnehmers zugreifen kann oder es kann auch vorgesehen sein, zwei oder mehrere Schlüssel zu generieren, von denen bestimmte Schlüssel jeweils nur einem der beiden Telekommunikationsteilnehmer zugesandt werden, mit denen dann dieser Telekommunikationsteilnehmer nur die Information über den anderen abrufen kann.

Oftmals kann die Problematik entstehen, dass einer der Telekommunikationsteilnehmer nicht eindeutig zu identifizieren ist. Dies kann beispielsweise der Fall sein, wenn für die Kennung die Netzwerkkennung eines der Telekommunikationsgeräte, die hier bei einem Teilnehmer zum Einsatz kommen, verwendet wird. Da eine derartige Netzwerkkennung lediglich eindeutig den Anschluss bzw. das eingesetzte Telekommunikationsgerät identifiziert, nicht jedoch die Person, die dieses Gerät verwendet, kann es nötig werden, zunächst eine eindeutige Identifikation vorzunehmen.

Hierfür kann es beispielsweise vorgesehen sein, dass im Rahmen des erfindungsgemäßen Verfahrens ein Telekommunikationsteilnehmer zunächst an eine Verifikationseinheit vermittelt wird, die insbesondere zur Identifikation vorgesehen ist. Eine derartige Verifikationseinheit kann von dem Telekommunikationsteilnehmer weitere Daten abrufen bzw. z.B. erfragen, um eine eindeutige Identifikation zu ermöglichen. Neben einer Identifikation kann es darüber hinaus vorgesehen sein, dass in einer Verifikationseinheit weitere andere Dienste durchgeführt werden, die mit einer Informationszurverfügungstellung in Verbindung stehen.

Erst nach der Inanspruchnahme der Verifikationseinheit, beispielsweise zur Identifikation des Telekommunikationsteilnehmers kann es vorgesehen sein, dass eine Weitervermittlung zu dem anderen Telekommunikationsteilnehmer durchgeführt wird. Die im Rahmen der erfindungsgemäßen Durchführung des Verfahrens vorgenommene Erstvermittlung und Weitervermittlung, beispielsweise hier für die Verifikationseinheit, kann im Rahmen eines sogenannten Prerouting oder Postrouting stattfinden, welches z.B. in der vorveröffentlichten Patentanmeldung DE 102 41 852.7 bekannt geworden ist.

Hierfür kann es auch vorgesehen sein, dass, wie dort beschrieben, einem Telekommunikationsteilnehmer zur Durchführung des Pre- und Postrouting eine anonymisierte Identifikation zugeordnet wird.

Die zuvor genannte Verifikationseinheit kann insbesondere wenn sie zur Identifikation eines Telekommunikationsteilnehmers eingesetzt wird, weitere automatisch oder individuell zur Verfügung gestellte Kennungen auswerten, um zu einer eindeutigen Identifikation zu gelangen. Hierbei kann es sich beispielsweise bevorzugt um biometrische Kennungen handeln.

Wie bereits zuvor erwähnt, kann es gemäß der Erfindung vorgesehen sein, informationsabhängig und/oder identifikationsabhängig, unterschiedliche, insbesondere mehrere unterschiedliche Schlüssel gleichzeitig zu generieren. So können beispielsweise identifikationsabhängig Schlüssel generiert werden, die jeweils für einen der Telekommunikationsteilnehmer vorgesehen sind. Ebenso kann es vorgesehen sein, informationsabhängige Schlüssel zu generieren, beispielsweise, wenn zu einem Telekommunikationsteilnehmer verschiedene Informationen vorliegen, für deren Zugriff jeweils unterschiedliche Schlüssel vorgesehen sein können.

In einer weiteren Ausführung des Verfahrens kann es auch vorgesehen sein, dass ein Schlüssel in Abhängigkeit einer Legitimation einem Telekommunikationsteilnehmer zur Verfügung gestellt wird. Beispielsweise kann es hier vorgesehen sein, dass bestimmte Telekommunikationsteilnehmer, z.B. angerufene Telekommunikationsteilnehmer, nur ganz bestimmte Informationen erhalten dürfen, wofür sie explizit legitimiert sein müssen.

Um dies in einem Beispiel zu verdeutlichen, kann z.B. ein Arzt nur dafür legitimiert sein, von einem Anrufer mögliche Patienten- bzw. Gesundheitsdaten zu erhalten, jedoch nicht Finanzdaten, wie beispielsweise die Bonität des Telekommunikationsteilnehmers.

So kann es vorgesehen sein, dass mit einem Schlüssel, der nur für einen bestimmten Teil von Informationen legitimiert nur ein Teilzugriff auf zur Verfügung gestellte Informationen möglich ist, z.B. im Rahmen ein Teilentschlüsselung.

Eine derartige Legitimation kann im Rahmen des erfindungsgemäßen Verfahrens z.B. vor der Übersendung eines Schlüssels geprüft werden, wofür z.B. wiederum eine Kennung des Telekommunikationsteilnehmers herangezogen werden kann. Um dies in dem vorgenannten Beispiel zu verdeutlichen, wird z.B. durch die Kennung des angerufenen Telekommunikationsteilnehmers, hier eine Arztpraxis, dem Telekommunikationssystem mitgeteilt, dass lediglich Schlüssel generiert werden dürfen, die einen Zugriff auf für Ärzte legitimierte Informationen ermöglichen.

In einer weiteren bevorzugten Ausbildung kann es darüber hinaus vorgesehen sein, dass ein zur Verfügung gestellter Schlüssel nur eine beschränkte Gültigkeit, z.B. eine zeitlich beschränkte Gültigkeit aufweist. Beispielsweise kann eine derartige Gültigkeit nur für die Dauer der Telekommunikation festgelegt sein, d.h. die Gültigkeit eines Schlüssels erlischt automatisch oder kurzu nachdem die Telekommunikation zwischen den beiden Teilnehmern unterbrochen wurde. Dies stellt sicher, dass einer der Telekommunikationsteilnehmer mit Hilfe des Schlüssels lediglich während der bestehenden Telekommunikation auf die entsprechenden Daten Zugriff nehmen kann.

Eine Beschränkung der Gültigkeit kann auch gerätebezogen und/oder kennungsbezogen sein. Beispielsweise kann ein übermittelter Schlüssel nur mit einem bestimmten Gerät verwendet werden und/oder wenn der Empfänger eine bestimmte Kennung aufweist, wobei unter Kennung die zuvor genannten Möglichkeiten zu verstehen sind. Eine Kennung, insbesondere des Schlüsselempfängers kann auch einen Teil des Schlüssels bilden, z.B. in dem Sinne, dass ein Schlüssel nur verwendet werden kann, wenn die darin enthaltene Kennung mit derjenigen eines Empfängers übereinstimmt.

Der Zugriff auf bestimmte Informationen zu einem Telekommunikationsteilnehmer kann in einer bevorzugten Ausführung z.B. dadurch erfolgen, dass ein Telekommunikationsteilnehmer mittels eines empfangenen Schlüssels Informationen über den anderen Telekommunikationsteilnehmer aus einer Datenbank abfragt.

Es kann sich hierbei um diejenige Datenbank handeln, die sämtliche Informationen über Telekommunikationsteilnehmer speichert und anhand derer beispielsweise ein Schlüssel generiert wurde oder aber auch um eine speziell hierfür vorgesehene Abfragedatenbank, in welche die abfragbaren Daten bzw. Informationen nach der Generierung eines Schlüssels übertragen wurden. So kann eine Abfragedatenbank, insbesondere nur eine Untermenge all derjeniger Informationen umfassen, die zu einem Telekommunikationsteilnehmer vorliegen.

Dies ist beispielsweise dann sinnvoll, wenn lediglich ein Schlüssel generiert wurde, der einen Zugriff auf eine Teilmenge von Informationen ermöglichst, die insgesamt zu einem Telekommunikationsteilnehmer vorliegen. Es bedarf dann lediglich der Übertragung derjeniger Daten in die Abfragedatenbank, für die der entsprechend generierte Schlüssel gültig ist.

Eine derartige Abfragedatenbank bzw. auch die Datenbank mit sämtlichen, zur Verfügung stehenden Informationen kann von einem speziell hierfür vorgesehenen Trustcenter betreut werden, so dass es sicher gestellt ist, dass derartige Daten nicht in unlauterer Weise ausgenutzt werden können. Beispielsweise kann so sicher gestellt werden, dass das Datenschutzgesetz eingehalten wird.

In einer weiteren erfindungsgemäßen Ausführung kann es darüber hinaus vorgesehen sein, dass ein identifizierter Telekommunikationsteilnehmer und/oder ihm zugeordnete Informationsdaten anonymisiert werden. Dies hat den Vorteil, dass ein Telekommunikationsteilnehmer über einen anderen zwar Informationen erhält, jedoch dieser Telekommunikationsteilnehmer nicht darüber informiert wird, welcher tatsächlichen Person die zur Verfügung gestellten Informationen zugeordnet sind. Eine explizite Identifikation kann dementsprechend erst dann erfolgen, wenn der Telekommunikationsteilnehmer, zu dem die Informationen zur Verfügung stehen, sich selbst bereit erklärt, sich dem anderen gegenüber zu identifizieren.

Dies kann, um es in einem Beispiel zu verdeutlichen, dann relevant sein, wenn ein potentieller Kunde bei einem Versandkaufhaus anruft, wobei nach einer erfolgten netzinternen Identifikation dessen Bonitätsdaten dem Versandkaufhaus in anonymisierter Form zur Verfügung gestellt werden. Hierfür wird für das Versandkaufhaus ein Schlüssel generiert, der an das Versandkaufhaus übermittelt wird, so dass dieses Versandkaufhaus anhand des Schlüssels aus einer Abfragedatenbank die entsprechenden Bonitätsdaten ermitteln kann. Das Versandkaufhaus weiß dementsprechend, dass es bei positiver Bonitätsaussage mit einem zahlungsfähigen potentiellen Kunden telefoniert, weiß jedoch noch nicht, um welchen Kunden es sich konkret handelt, bis dass dieser seine Identifikationsdaten selbst preisgibt.

In einer weiteren erfindungsgemäßen Ausgestaltung kann es ebenso vorgesehen sein, dass ein Telekommunikationsteilnehmer die Generierung eines Schlüssels zum Abfragen von Informationen explizit netzintern beauftragt, d.h. ein entsprechender Schlüssel, der einen Zugriff auf Informationen bereitstellt, wird nicht automatisch generiert, sondern lediglich erst auf Anfrage.

Eine Verwendung des Schlüssel kann z.B. derart erfolgen, dass der Schlüssel vom Empfänger an einen Dienstleister z.B. über ein Telekommunikationsnetzwerk gesendet wird. Im Gegenzug erhält der Telekommunikationsteilnehmer diejenigen Information, die Ihm aufgrund des Besitzes des Schlüssel zustehen.

Ebenso können die Informationen auf Anfrage von einem Dienstleister dem Schlüsselempfänger in verschlüsselter Form zugesendet werden, wobei mit dem Schlüssel dann eine Entschlüsselung möglich ist.

Das erfindungsgemäße Verfahren kann hier insbesondere mit einem Telekommunikationssystem durchgeführt werden, welches in der Lage ist, innerhalb eines Telekommunikationsnetzwerkes einen Schlüssel zu generieren, der wenigstens einem der Telekommunikationsteilnehmer bzw. dessen Telekommunikationsgerät übermittelbar ist, wobei mit einem derartigen Schlüssel sodann der Telekommunikationsteilnehmer in die Lage versetzt ist, auf Informationen über den anderen Telekommunikationsteilnehmer wie zuvor beschrieben zuzugreifen.

Ein Ausführungsbeispiel der Erfindung ist in der nachfolgenden Figur erläutert:

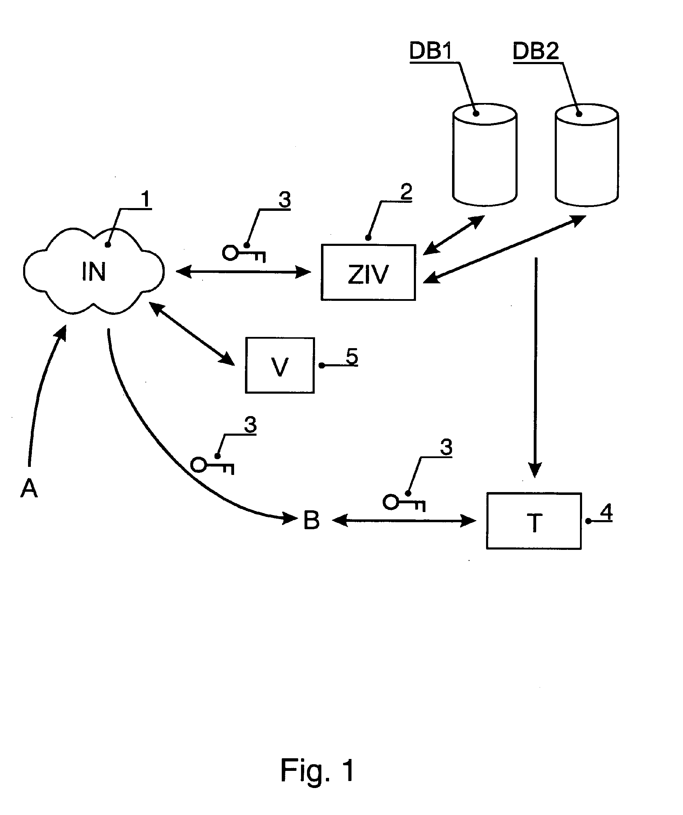

Die Figur 1 zeigt in schematischer Darstellung eine mögliche Kommunikation zwischen zwei Telekommunikationsteilnehmern A und B, hier z.B. per Telefon, wobei dem Telekommunikationsteilnehmer B ergänzende Informationen über den Telekommunikationsteilnehmer A zur Verfügung gestellt werden sollen. Wie dargestellt, kann es hier vorgesehen sein, dass in einem Telekommunikationsnetzwerk, hier einem sogenannten intelligenten Netz 1 eine zentrale Informationsverarbeitung 2 vorgesehen ist, an die wenigstens eine Datenbank, im vorliegenden Beispiel zwei Datenbanken DB1 und DB2, angegliedert sind. Diese Datenbanken können beliebige Informationen über die möglichen Telekommunikationsteilnehmer zur Verfügung stellen.

Möchte nun ein Telekommunikationsteilnehmer A eine Telekommunikationsverbindung zu einem Teilnehmer B aufbauen, so wird der Telekommunikationsteilnehmer A zunächst im intelligenten Netz 1 z.B. mittels der zentralen Informationsverarbeitung 2 identifiziert.

Nach einer derartigen Identifikation, beispielsweise anhand einer Kennung, die der Telekommunikationsteilnehmer A zur Verfügung stellt, wie beispielsweise eine Netzkennung, kann ein Schlüssel 3 generiert werden, der einen Zugriff ermöglicht auf diejenigen Informationen, die in den Datenbanken, z.B. DB1 und DB2 zu dem Telekommunikationsteilnehmer A vorgehalten werden. Der Schlüssel stellt dementsprechend ein Bindeglied dar zwischen dem Telekommunikationsteilnehmer A und den mit ihm korrelierten Informationen der entsprechenden Datenbank bzw. Datenbanken.

Diejenigen Informationen, auf die mittels des Schlüssels 3 ein Zugriff möglich ist, können sodann in diesem Beispiel an ein Trustcenter 4 übertragen werden, welches hierfür beispielsweise eine Abfragedatenbank zur Verfügung stellt, in welcher die dann abfragbaren Daten gespeichert werden, zumindest für die Gültigkeitsdauer des Schlüssels. Ebenso kann es vorgesehen sein, dass in dem Trustcenter 4 bereits die Datenbanken DB1 und DB2 gehostet werden.

Der generierte Schlüssel 3 wird gemäß diesem Beispiel über das intelligente Netz an den Telekommunikationsteilnehmer B versendet, der diesen empfängt. Es liegt sodann im Belieben des Telekommunikationsteilnehmers B, den empfangenen Schlüssel 3 einzusetzen, um zusätzliche Informationen, nämlich die bereit gestellten Informationen, über den Telekommunikationsteilnehmer A abzufragen.

Hierbei kann es vorgesehen sein, dass seitens eines Dienstleisters, beispielsweise des Netzwerkbetreibers oder auch des Trustcenterbetreibers, für die Übermittlung der Informationen eine Gebühr erhoben wird. Diese Gebühr wird in Rechnung gestellt, sobald der empfangene Schlüssel 3 eingesetzt wird, um die Informationen abzufragen.

Bezogen auf das bereits vorangenannte Beispiel kann es hier der Fall sein, dass ein Patient A seinen Arzt B anruft, wobei der Patient A bereits im intelligenten Netz identifiziert wird und so dem Arzt B ein Schlüssel zugesandt wird, mit dem dieser auf sämtliche Patienten-, Kranken- bzw. Gesundheitsdaten zugreifen kann.
Hierbei kann es sein, dass diese Daten lediglich eine Teilmenge aller derjenigen Daten darstellen, die über den Patienten A gespeichert sind. Beispielsweise sind über den Patienten A auch Daten betreffend die Krankenkasse gespeichert, wobei jedoch kein Schlüssel generiert wird, der einen Zugriff auf diese Daten ermöglicht, da der Arzt B nicht legitimiert ist, auf derartige Daten Zugriff zu nehmen.

Der Arzt kann sodann durch Verwendung des Schlüssels 3 bei dem Trustcenter 4 die entsprechenden Daten abrufen und sich so über das Krankheitsbild oder sämtliche anderen gesundheitsrelevanten Informationen des Patienten A ein Bild zu machen.

Die Figur 1 zeigt noch eine weitere Möglichkeit, bei der zur eindeutigen Identifikation eine Verifikationseinheit 5 in die Kommunikation zwischengeschaltet ist, beispielsweise wenn eine eindeutige Identifikation nicht ohne Weiteres möglich ist. In diesem Fall kann es vorgesehen sein, dass bei dem Aufbau einer Telekommunikationsverbindung seitens des Teilnehmers A zunächst im intelligenten Netz eine Erstvermittlung an die Verifikationseinheit 5 vorgenommen wird, in der die eindeutige Identifikation festgestellt werden soll. Hierfür können z.B. unterschiedliche Kennungen abgefragt werden, beispielsweise eine z.B. standardmäßig mitübermittelte Netzwerkkennung sowie ergänzend weitere Kennungen zur eindeutigen Identifikation.

So kann beispielsweise auch bei einer Netzwerkkennung lediglich eindeutig der Anschluss bzw. das Telekommunikationsgerät identifiziert werden, von dem ein Anruf ausgeht, es steht jedoch zu diesem Zeitpunkt noch nicht fest, von welchem Telekommunikationsteilnehmer das entsprechende Gerät bedient wird. So kann durch Abfrage weiterer Kennungen, wie beispielsweise biometrischer Kennungen oder sonstige personenbezogene Kennungen eine Identifikation zunächst vorgenommen werden. Anhand dieser dann erfolgten Identifikation können der oder die Schlüssel generiert werden, um auf die zugeordneten Informationen Zugriff zu erhalten, woraufhin erst dann im Anschluss eine Zweitvermittlung an den Telekommunikationsteilnehmer B erfolgt.

## Patentansprüche

1. Verfahren zur Durchführung einer Telekommunikation in einem Telekommunikationsnetzwerk zwischen wenigstens zwei Telekommunikationsteilnehmern, die jeweils ein Telekommunikationsgerät verwenden, wobei wenigstens einem der Telekommunikationsteilnehmer Informationen über den anderen Telekommunikationsteilnehmer zur Verfügung gestellt werden, **dadurch gekennzeichnet, dass** innerhalb des Telekommunikationsnetzwerkes (1) wenigstens ein Schlüssel (3) generiert wird, der wenigstens einem Telekommunikationsteilnehmer (B) bzw. dessen Telekommunikationsgerät übermittelt wird, wobei der/die Schlüssel (3) dem Telekommunikationsteilnehmer (B) ermöglicht, auf Informationen, insbesondere in wenigstens einer Datenbank (DB1, DB2; T) vorgehaltene Informationen über den anderen Telekommunikationsteilnehmer (A) zuzugreifen.

2. Verfahren nach Anspruch 1, **dadurch gekennzeichnet, dass** wenigstens ein Telekommunikationsteilnehmer (A), insbesondere ein Anrufer, identifiziert wird, insbesondere anhand einer Kennung, insbesondere der Netzwerkkennung seines Telekommunikationsgerätes bzw. -anschlusses, sodaß ein identifikationsabhängiger Schlüssel (3) generiert wird, der einen Zugriff auf Informationen erlaubt, die mit dem identifizierten Telekommunikationsteilnehmer (A) korreliert sind.

3. Verfahren nach einem der vorherigen Ansprüche, **dadurch gekennzeichnet, dass** ein Schlüssel (3) in Abhängigkeit der Identifikation beider Teilekommunikationsteilnehmer generiert wird.

4. Verfahren nach Anspruch 2, **dadurch gekennzeichnet, dass** ein Telekommunikationsteilnehmer (A) zuerst an eine Verifikationseinheit vermittelt wird, insbesondere zur Identifikation und anschließend zum anderen Telekommunikationsteilnehmer (B) vermittelt wird.

5. Verfahren nach einem der vorherigen Ansprüche, **dadurch gekennzeichnet, dass** die möglichen Informationen, auf die zugegriffen werden kann, netzintern in wenigstens einer Datenbank (DB1, DB2) gespeichert sind.

6. Verfahren nach einem der vorherigen Ansprüche, **dadurch gekennzeichnet, dass** informationsabhängig und/oder identifikationaabhängig unterschiedliche, insbesondere mehrere unterschiedliche Schlüssel (3) gleichzeitig generiert werden.

7. Verfahren nach einem der vorherigen Ansprüche, **dadurch gekennzeichnet, dass** ein Schlüssel (3) in Abhängigkeit einer Legitimation einem Telekommunikationsteilnehmer (B) zur Verfügung gestellt wird.

8. Verfahren nach einem der vorherigen Ansprüche, **dadurch gekennzeichnet, dass** ein Schlüssel (3) eine beschränkte Gültigkeit aufweist, insbesondere eine zeitlich beschränkte Gültigkeit und/oder eine gerätespezifisch bzw. kennungsspezifisch beschränkte Gültigkeit.

9. Verfahren nach einem der vorherigen Ansprüche, **dadurch gekennzeichnet, dass** ein Telekommunikationsteilnehmer (B) mittels eines empfangenen Schlüssels (3) Informationen über den anderen Telekommunikationsteilnehmer (A) aus einer Datenbank (DB1, DB2; T) abfragt, insbesondere aus einer Abfragedatenbank (T), in welche die abfragbaren Informationen nach Generierung des Schlüssel (3) übertragen wurden.

10. Verfahren nach einem der vorherigen Ansprüche, **dadurch gekennzeichnet, dass** ein identifizierter Telekommunikationsteilnehmer
(A) und/oder ihm zugeordnete Informationen anonymisiert werden.

11. System zur Durchführung einer Telekommunikation in einem Telekommunikationsnetzwerk zwischen wenigstens zwei Telekommunikationsteilnehmern, die jeweils ein Telekommunikationsgerät verwenden, wobei wenigstens einem der Telekommunikationsteilnehmer Informationen über den anderen Telekommunikationsteilnehmer zur Verfügung stellbar sind, **dadurch gekennzeichnet, dass** innerhalb des Telekommunikationsnetzwerkes (1) wenigstens ein Schlüssel (3) generierbar ist, der wenigstens einem Telekommunikationsteilnehmer (B) bzw. dessen Telekommunikationsgerät übermittelbar ist, wobei der/die Schlüssel (3) einem Telekömmunikationsteilnehmer (B) ermöglicht, auf in wenigstens einer Datenbank (DB1, DB2; T) vorgehaltene Informationen über den anderen Telekommunikationsteilnehmer (A) zuzugreifen.
